# EUROPEAN PATENT APPLICATION

(11) **EP 4 393 298 A1**
(43) Date of publication of application: **03.07.2024**
(21) Application number: 23219131.2
(22) Date of filing: 21.12.2023
(51) Int. Cl.: A01G 5/00, A01G 9/14, A01G 22/60

(54) **AUTOMATED SYSTEM AND METHOD FOR THE SEPARATION OF STIGMAS FROM FLOWERS**

(30) Priority: 02.01.2023 IT 202300000015
(71) Applicant: Ororosso.IO S.r.l. S.B., 25050 Pian Camuno (BS) (IT)
(72) Inventor: GREGORINI, Paride Diego, 25050 Pian Camuno (BS) (IT); GREGORINI, Silvio, 25050 PIAN CAMUNO (BS) (IT)
(74) Representative: Autuori & Partners S.R.L.

(57) **Abstract**

Automatic system for the separation and selection of stigmas and separation from the flower through the use of a transport system, a cryogenic system, a vision system, and equipment for mechanical handling and manipulation including a feed container/depot (1), an orientation system (2) for the flower, a transport system (3), a set of tongs (4) for handling and manipulating the flower, a low temperature bath (5), a vision system (6), an extractor (7) to separate the stigmas from the flower, a container (8) to collect the stigmas, a container (9) to collect the flower deprived of stigmas, a logic unit (10) to manage all mechanical operations and software (11) for carrying out selection operations and data management.

## Description

In botany, stigmas are the female part of the flower that receives pollen, awaiting pollination. Generally, these parts are very delicate and, in some cases, can be components of products in the agricultural, cosmetic, and pharmaceutical industries. For instance, saffron flowers (crocus sativus) have stigmas with high economic value, especially due to the complexity of manual harvesting and selection.

Identifying automatic or semi-automatic systems for flower harvesting, especially for selecting and separating stigmas, can accelerate the process, ensuring consistency regardless of the operator's manual skills.

### State of the Art

Cultivating bulb flowers, such as saffron, can be done using various technologies, from traditional soil cultivation to greenhouse or above-ground methods like hydroponics or aeroponics, where it's possible to control different environmental and nutritional parameters. These techniques yield different production levels and qualities.

The issue addressed here is the manual selection and separation of stigmas from flowers, a labor-intensive process prone to errors. The fact that the system relies solely on the attention and manual dexterity of the operator can lead to scenarios where the selection is not accurate and precise, resulting in the rejection of quantities of stigmas or parts thereof. Alternatively, it may involve the selection of flower parts different from the stigmas, which are the true subject of the selection process.

Given that the final cost of the processed product is significantly influenced by the labor required for its handling and selection, a methodology capable of automatically performing this operation would make the process more cost-effective, ensuring a product of higher quality.

### Invention Presentation

The technical problem addressed by this invention is the automation of the stigma separation process from the flower to standardize separation and selection phases for maximum quality and efficiency.

The underlying concept of the invention is to leverage certain physical properties of a biological product containing water, such as a flower, and more specifically, the saffron flower. The idea is based on the fact that a material containing a significant amount of water, like a vegetable, undergoes a structural change when frozen, becoming fragile and susceptible to breakage under any external force, such as bending, rotating, or cutting.

The invention aims to exploit this intrinsic quality of the flower, wherein the instantaneous freezing of the flower's base, the calyx, makes it specifically fragile. This precision freezing achieves two outcomes: firstly, the flower's base solidifies instantly, facilitating easy handling by a manipulative system like a clamp; secondly, the localized frozen part allows a delicate breakage of the stigma base without compromising their condition and quality.

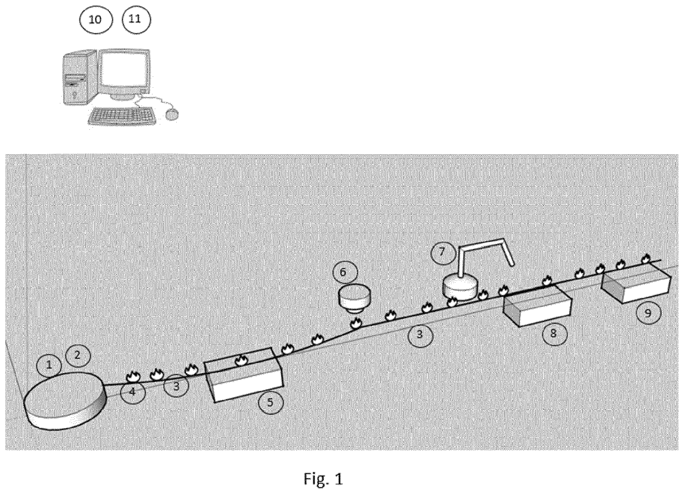

Below is a description of the invention with reference to Figure 1: the system comprises a storage container (1) where the flowers to be processed are placed, a loading system (2) with the function of orienting the flowers to standardize their position, a transport chain (3), a gripping and manipulation clamp (4), an instantaneous freezing bath (5) for cryogenic treatment, a vision system (6) that locates the stigmas, a mechanism (7) that mechanically separates the stigmas from the flower, depositing them in containers (8) and (9) respectively for the collection of stigmas and treated flowers.

All parameters and information from the treatment and selection process are controlled by a logical unit (10) equipped with management software (11). This unit (10) also stores the data, depositing it in a database, including in distributed form.

The entire system must ensure the continuity of the flower flow to avoid interruptions that could lead to quality losses or product contamination. Below is a description of the typical flow of a processing process according to the methods identified in the invention.

In the loader (1), flowers are bulk-deposited after being collected. Through an orientation path provided by the loader (2), the flower is oriented with its base downward and deposited on the transport system (3). Once the flower is housed within its support, a part of the transport chain (3), it is picked up by the clamp (4), which brings the calyx in contact with the freezing zone (5) composed of solutions allowing a temperature lower than at least -40 °C. The flower, continuously transported by the chain (3), passes under the vision system (6) that precisely locates the position of the stigmas relative to a fixed point. Based on this position, the system first positions and then activates the picking clamp (7), which easily collects the stigmas by detaching them from their base at a specific point corresponding to the naturally fragile frozen zone, ensuring an instant and precise breaking.

The stigmas separated from their flower are then deposited by the picking clamp (7) in the collection warehouse (8) to ensure the integrity and quality of the product. The rest of the flower, devoid of stigmas, is deposited in another container (9) for potential other uses.

The entire electromechanical and physical process is governed by the logical unit (10) and its corresponding software (11). Furthermore, the logical unit (10) and its software collect and deposit all process data in a database, also in distributed form, for traceability and statistical purposes.

## Claims

1. Automatic system for the separation and selection of stigmas and separation from the flower through the use of a transport system, a cryogenic system, a vision system, and equipment for mechanical handling and manipulation including:
• a feed container/depot (1);
• an orientation system (2) for the flower;
• a transport system (3);
• a set of tongs (4) for handling and manipulating the flower;
• a low temperature bath (5);
• a vision system (6);
• an extractor (7) to separate the stigmas from the flower;
• a container (8) to collect the stigmas;
• a container (9) to collect the flower deprived of stigmas;
• a logic unit (10) to manage all mechanical operations;
• software (11) for carrying out selection operations and data management.

2. The system, according to claim 1, is characterized as follows: the feed container/magazine (1), the guide system for flower orientation (2), the transport system (3), the tongs (4), the low temperature bath (5), the vision system (6), the stigma extractor (7), the stigma container (8) and the flower container (9) are in line and connected mechanically and electrically to each other.

3. The system, according to claim 1, is **characterized in that** there is a logic unit (10) equipped with a piece of software (11) which manages all the logic operations involving movement and process times.

4. Automatic method for the separation and selection of stigmas and separation from the flower through the use of cryogenic technology, a vision system, and mechanical manipulation comprising the following stages:
• loading the flower into the feeding supplier/depot (1);
• flower placement and orientation (2);
• loading the flower on the transport system(3);
• the tongs hold the correctly oriented flower(4);
• immersion of the calyx of the flower in the cooling solution (5);
• passage of the flower under the vision system (6) to identify the exact position of the stigmas;
• separation of the stigmas from the flower through the grip and the mechanical action of the extractor (7);
• unloading of the separated stigmas and flower elements into the two containers (8) and (9);
• storage of all process data in the logical unit (10) equipped with a piece of software (11) and their transfer to the database.

5. The method, according to claim 4, is **characterized in that** the loading, positioning, transport and holding system composed of the elements (1), (2), (3) and (4) transfers, positions, directs and holds optimally the flower.

6. The method, according to claim 5, is **characterized in that** the flower positioned on the tongs (4) is brought into contact by the calyx part with the low-temperature bath (5).

7. The method, according to claims 5 and 6, positions the flower under a vision system (6) which locates the position of the stigmas in space.

8. The method, according to claim 7, is **characterized in that** the extractor (7) according to the coordinates provided by the vision system (6) grabs the stigmas and detaches them from the base of the flower by exploiting the state of fragility ensured by the freezing effect.

9. The method, according to claim 8, is **characterized by** the fact that the stigmas and rest of the flower are deposited, the former by the tongs (4) in the container (8) and the latter by the extractor (7) on the transport system (3) which deposits them in the container (9).

10. The method, according to claims 4,5,6,7,8,9, is **characterized by** the fact that all process data such as (in a non-exhaustive list): dates, times, lot numbers, images provided by the vision system (6), quantities, and environmental parameters are archived, through the processing of logic (10) and software (11) in a database both locally and also in a decentralized form.
